(19) Europäisches Patentamt
European Patent Office
Office européen des brevets

(11) **EP 3 252 936 A1**

(12) **EUROPÄISCHE PATENTANMELDUNG**

(43) Veröffentlichungstag:
**06.12.2017 Patentblatt 2017/49**

(51) Int Cl.:
***H02K 51/00*** *(2006.01)*   ***H02K 1/24*** *(2006.01)*
***H02K 16/02*** *(2006.01)*

(21) Anmeldenummer: **16172465.3**

(22) Anmeldetag: **01.06.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Grundfos Holding A/S**
**8850 Bjerringbro (DK)**

(72) Erfinder:
• **Søegaard, Allan Ivo**
**9500 Hobro (DK)**
• **Bendixen, Flemming Buus**
**9500 Hobro (DK)**
• **Sorea, Alexandru**
**9000 Aalborg (DK)**
• **Rassmusen, Henrik**
**8840 Rødkærsbro (DK)**

(74) Vertreter: **Patentanwälte Vollmann & Hemmer**
**Wallstraße 33a**
**23560 Lübeck (DE)**

(54) **RELUKTANZMAGNETGETRIEBE**

(57)    Das Magnetgetriebe weist einen Magneten (8) auf, eine Antriebswelle (1), eine Abtriebswelle (2) und einen Getriebeträger (3), die magnetisch miteinander gekoppelt sind. Gemäß der Erfindung ist nur ein einziger Magnet (Permanentmagnet oder Elektromagnet) vorgesehen, dessen Nord-Süd Ausrichtung in axialer Richtung verläuft, die anderen Bauelemente sind (grösstenteils) weichmagnetisch.

Fig. 1

EP 3 252 936 A1

**Beschreibung**

Die Erfindung betrifft ein Magnetgetriebe, insbesondere ein Reluktanzgetriebe, mit einem Magnetkrafterzeuger, mit einer Antriebswelle, mit einer Abtriebswelle und mit einem Getriebeträger, die magnetisch miteinander bewegungsgekoppelt sind.

Magnetgetriebe zählen seit langem zum Stand der Technik und werden bevorzugt dort eingesetzt, wo eine räumliche Trennung zwischen Antrieb und Abtrieb, wie beispielsweise beim Umgang mit chemischen oder radioaktiven Stoffen, erforderlich ist. Ein wesentlicher Vorteil solcher magnetischer Getriebe ist jedoch nicht nur die mögliche räumliche Trennung zwischen Antrieb und Abtrieb, sondern, abgesehen von den Lagern, die Verschleißfreiheit, da die miteinander gekoppelten Getriebeteile berührungsfrei miteinander gekoppelt sind. Der Einsatz solcher Magnetgetriebe hat sich jedoch in der Vergangenheit auf Spezialanwendungen beschränkt, da die damit zu übertragenden Momente vergleichsweise klein waren.

Mit Weiterentwicklung der Magnete, insbesondere mit der Verfügbarkeit leistungsstarker Neodymmagnete und SMC-Materialien (SMC steht für Soft Magnetic Composit), mit denen die Magnete in ihrer Form und Polarisierung praktisch frei gestaltbar sind, haben solche magnetischen Getriebe an Bedeutung gewonnen, da das zu übertragende Drehmoment und die konstruktiven Möglichkeiten ganz erheblich gesteigert worden sind. Ein weiterer Vorteil neben der möglichen räumlichen Trennung zwischen Antrieb und Abtrieb ist es, dass jedes Magnetgetriebe auch gleichzeitig eine Überlastsicherung beinhaltet.

Liegt nämlich an einem der Getriebeanschlüsse ein unzulässig hohes Drehmoment an, so reißt der magnetische Fluss ab, wodurch die Getriebeverbindung, also der Kraftschluss zwischen Antrieb und Abtrieb und umgekehrt, unterbrochen ist.

Kostenaufwendig bei Magnetgetrieben sind die Vielzahl der meist umfänglich an den Getrieberädern angeordneten Permanentmagnete sowie deren Montage.

Der grundsätzliche Aufbau eines solchen Magnetgetriebes ist in DE 10 2008 060 284 A1 beschrieben. Aus DE 42 23 815 A1 ist ein magnetisches Reihengetriebe bekannt, bei dem ebenfalls umfänglich der Getrieberäder eine Vielzahl von Magneten angeordnet sind, deren magnetischer Fluss über weichmagnetische Statorbleche und das Getriebegehäuse geführt werden. Ein kompakt bauendes ebenfalls mit zwei magnetischen Rotoren ausgestattetes Magnetgetriebe ist aus WO 2015/197067 A1 bekannt. Diese Konstruktion eignet sich besonders für Anwendungen, bei denen Antrieb und Abtrieb hermetisch voneinander getrennt werden müssen. Die Anzahl der zu verbauenden Magnete ist jedoch hoch, was stets kostenaufwendig ist und bei der Montage Probleme bereiten kann.

Insoweit günstiger sind sogenannte Reluktanzgetriebe, die im Wesentlichen auf dem Effekt beruhen, dass sich ein magnetischer Kreis so verhält, dass er stets den geringsten magnetischen Widerstand bildet. Dort wirken im Wesentlichen Reluktanzkräfte und weniger Lorentzkräfte, die den magnetischen Kreis zu schließen versuchen, so dass sein Widerstand minimal wird.

Ein solches Reluktanzgetriebe ist aus DE 10 2013 213 569 A1 (Figur 6) bekannt. Bei dem dort anhand von Figur 6 beschriebenen Getriebe sind vier Permanentmagnete am Innenrotor vorgesehen, deren Polorisierung paarweise gegenüberliegend radial nach innen und nach außen gerichtet ist. Diese stehen in Wirkverbindung mit einem Ring, in dem Polstäbe angeordnet sind, welche den magnetischen Fluss von Rotor auf einen den Ring mit den Polstäben umgebenden Außenrotor übertragen. Geschlossen wird der magnetische Kreis durch eine zentrale magnetisierbare Welle des Innenrotors, welche stirnseitig magnetisch mit dem Außenrotor gekoppelt ist.

Vor diesem Hintergrund liegt der Erfindung die Aufgabe zugrunde, ein Magnetgetriebe, insbesondere ein Reluktanzgetriebe derart auszubilden, dass es kostengünstig hergestellt werden kann und effektiv im Betrieb ist.

Diese Aufgabe wird durch ein Magnetgetriebe mit den in Anspruch 1 angegebenen Merkmalen gelöst. Vorteilhafte Ausgestaltungen der Erfindung ergeben sich aus den Unteransprüchen, der nachfolgenden Beschreibung und der Zeichnung.

Das erfindungsgemäße Magnetgetriebe, insbesondere Reluktanzgetriebe, weist einen Magnetkrafterzeuger, eine Antriebswelle, eine Abtriebswelle und einen Getriebeträger auf, die magnetisch miteinander bewegungsgekoppelt sind. Gemäß der Erfindung ist nur ein Magnetkrafterzeuger vorgesehen, dessen Nord-Süd Ausrichtung zumindest Abschnittsweise in Achsrichtung einer Welle oder parallel dazu verläuft.

Grundgedanke des erfindungsgemäßen Magnetgetriebe ist es, nur einen Magnetkrafterzeuger, beispielsweise einen einzigen Magneten zu verwenden, wodurch der Aufbau vereinfacht, die Herstellungskosten reduziert und eine sehr kompakte Getriebekonstruktion erzielt werden kann. Je nach Magnetkrafterzeuger ist die Nord-Süd Ausrichtung nur abschnittsweise in Achsrichtung einer Welle oder parallel dazu oder auch über den gesamten Querschnitt und/oder über die gesamte axiale Länge.

Die Begriffe Antriebswelle, Abtriebswelle und Getriebeträger im Sinne der vorliegenden Erfindung dienen im Wesentlichen der begrifflichen Unterscheidung dieser Bauteile, nicht jedoch deren Funktionalität. Es versteht sich, dass diese drei Getriebeteile relativ zueinander beweglich sind, ähnlich wie dies bei einem 3-Wellen-Planetengetriebe der Fall ist. Dabei kann gemäß der Erfindung der Antrieb auch über die Abtriebswelle erfolgen, wobei dann der Abtrieb über die Antriebswelle erfolgt. In diesem Falle ergibt sich keine Übersetzung sondern eine Untersetzung. Der Getriebeträger kann ortsfest oder beweglich angeordnet sein, auch hieraus ergibt sich ein unterschiedliches Übersetzungsverhältnis zwischen An- und Abtriebswelle. Auch kann der Getriebeträger selbst die Abtriebswelle bilden, dann kann die nur als solche bezeichnete Abtriebswelle entweder frei drehbar oder festgesetzt angeordnet sein. Dies wird weiter unten noch anhand eines Ausführungsbeispiels im Einzelnen erläutert.

Gemäß einer vorteilhaften Ausgestaltung der Erfindung ist der Magnetkrafterzeuger durch einen scheiben- oder ringförmigen Permanentmagneten gebildet, dessen Mittelachse mit der Achse einer Welle zusammenfällt. Ein solcher scheiben- oder ringförmiger Permanentmagent ist besonders kostengünstig in der Herstellung, u.a. weil die Magnetisierung relativ einfach ist. Insbesondere bei Verwendung eines modernen aus Neodym gebildeten Magneten kann mit nur einem Magneten ein hoch effektives und hohe Momente übertragendes Magnetgetriebe geschaffen werden.

Ein solcher scheiben- oder ringförmiger Permanentmagnet kann insbesondere bei größerer Bauart vorteilhaft segmentiert oder aus nebeneinander angeordneten Teilmagneten gleich gerichteter Polarität aufgebaut sein. Entscheidend ist, dass die magnetische Wirkung so ist, wie bei einem einzigen in einer Richtung, nämlich parallel zu einer Drehachse, polarisierten Permanentmagnet. Der Permanentmagnet kann also quasi mosaikartig aufgebaut sein, und muss somit nicht notwendig aus einem Bauteil bestehen.

Auch muss es sich bei dem Permanentmagnet oder den Teilmagneten nicht notwendigerweise um konventionelle Magnete handeln, dies können vielmehr auch laminiert aufgebaute Magnete sein, wie dies zum Stand der Technik zählt.

Der Permanentmagnet oder der Teilmagnet ist bevorzugt schützend eingekapselt. Unter Verwendung z.B. eines rostfreien Stahlmantels kann der Magnet und das Getriebe auch in aggressiven Umgebungen eingesetzt werden.

Gemäß einer vorteilhaften Ausgestaltung der Erfindung ist es vorgesehen, den Permanentmagnet bzw. den aus Teilmagneten gebildeten Permanentmagnet umfänglich mit einer elektrischen Spule zu umgeben, die von außerhalb des Getriebes bestrombar ist. Hierdurch kann die Magnetkraft des Magneten elektromagnetisch unterstützt und somit gesteigert werden, wodurch höhere Drehmomente übertragbar sind und je nach Bestromung der Spule auch unterschiedliche Drehmomente übertragbar sind. Insbesondere wenn das erfindungsgemäße Magnetgetriebe als Überlastsicherung dienen soll oder als Lastbegrenzer, dann kann durch entsprechende Bestromung der Spule diese Lastgrenze quasi stufenlos in Grenzen eingestellt werden.

Alternativ ist gemäß der Erfindung vorgesehen, den Magnetkrafterzeuger durch einen Elektromagneten oder einen Supraleiter zu bilden oder zumindest als Teil des Magnetkrafterzeugers vorzusehen. Eine solche Ausbildung kann hoch effektiv sein, bedarf jedoch weiterer konstruktiver Vorkehrungen bzw. Bereitstellung von entsprechenden Umgebungsbedingungen (insbesondere bei Verwendung eines Supraleiters). Die Bestromung von rotierenden Bauteilen ist dem Fachmann jedoch geläufig. So kann in der vorliegenden Erfindung Wechselstrom oder - bevorzugt - Gleichstrom benutzt werden.

In einer besonderen Variante der Erfindung besteht der Magnetkrafterzeuger aus sowohl Permanentmagnet und Elektromagnet oder Supraleiter. Diese Variante gibt gute Steuerungsmöglichkeiten.

Eine besonders vorteilhafte und kompakte Ausgestaltung des Getriebes ergibt sich, wenn An- und Abtriebswelle zueinander fluchten und achsgleich zum Getriebeträger angeordnet sind.

Konstruktiv besonders vorteilhaft ist es, wenn der Magnetkrafterzeuger mit der Antriebswelle verbunden ist und der Magnetkrafterzeuger oder ein axial daran anschließender und magnetisch damit verbundener magnetischer Leiter eine Anzahl Z1 magnetisch wirksamer radialer Vorsprünge aufweist. Mit dieser konstruktiven Anordnung wird die in Achsrichtung des Getriebes ausgerichtete Polarisierung des Magneten in radialer Richtung in den Bereich der Vorsprünge umgelenkt.

Vorteilhaft ist die Abtriebswelle mit einem magnetischen Leiter verbunden, welcher den Magnetkrafterzeuger oder einen damit verbundenen magnetischen Leiter umgibt und mit diesem magnetisch verbunden aber mechanisch getrennt ist. Dieser magnetische Leiter weist eine Anzahl Z2 von magnetisch wirksamen radialen Vorsprüngen auf, so dass auch abtriebswellenseitig für eine Umlenkung des Magnetflusses von radialer in axialer Richtung bzw. umgekehrt Sorge getragen ist.

Vorteilhaft weist der Getriebeträger eine Anzahl Z3 von den magnetischen Fluss leitenden Elementen auf, welche ringförmig und umfänglich der radialen Vorsprünge Z1 und Z2 angeordnet sind. Diese Elemente führen den magnetischen Fluss von den radialen Vorsprüngen des Magnetkrafterzeugers oder eines daran anschließenden magnetischen Leiters zu den Vorsprüngen des magnetischen Leiters der Abtriebswelle. Diese Elemente bilden Polstäbe und sind vorteilhaft stabförmig ausgebildet, sie werden auch als Modulatoren bezeichnet. Diese ringförmige und umfängliche Anordnung der Polstäbe/Modulatoren ist besonders vorteilhaft, da bei der Übertragung des magnetischen Flusses von einem antriebsseitigen radialen Vorsprung über einen Polstab zu einem abtriebsseitigen radialen Vorsprung Wärme entsteht, die bei bekannten Magnetgetriebekonstruktionen quasi im Getriebe gefangen ist, während sie bei der vorstehend beschriebenen ringförmigen und umfänglichen Anordnung typischerweise an den Getriebeträger bzw. ein damit verbundenes Gehäuse und somit großflächig nach außen abgeleitet wird, ohne die in der Regel wärmeempfindlichen inneren Strukturen des Getriebes merklich zu beeinflussen.

Die vorgenannte Anordnung mit einer Anzahl Z1 magnetisch wirksamer radialer Vorsprünge einerseits, einer Anzahl Z2 magnetisch wirksamer radialer Vorsprünge anderseits sowie eine Anzahl Z3 von den magnetischen Fluss leitenden Elementen, welche ringförmig und umfänglich der radialen Vorsprünge Z1 und Z2 angeordnet sind, ist konstruktiv besonders vorteilhaft und kann auch in vorteilhafter Weise auch mit mehreren Magnetkrafterzeugern eingesetzt werden, ist also grundsätzlich auch unabhängig von der Ausgestaltung gemäß Anspruch 1 der vorliegenden Erfindung einsetzbar.

Diese den magnetischen Fluss führenden Elemente sind vorteilhaft durch radial nach innen gerichtete magnetisch wirksame Vorsprünge eines Ringes aus magnetisch leitendem Material gebildet. Bei dieser Ausgestaltung ist die Wärmeabfuhr nach außen besonders gut. Zudem ergibt sich eine sehr kompakte Bauart, die kostengünstig in der Herstellung ist.

Gemäß einer vorteilhaften Ausgestaltung des erfindungsgemäßen Magnetgetriebes ist mindestens ein den magnetischen Fluss führendes Element von einer elektrischen Spule umgeben. Eine solche elektrische Spule kann zur Erfassung von Drehzahl und/oder Drehmoment des Getriebeträgers relativ zur Antriebs- und/oder Abtriebswelle verwendet werden oder aber zur Erzeugung elektrischer Energie beim Betrieb des Getriebes. Die Erzeugung elektrischer Energie beim Betrieb des Getriebes innerhalb des Getriebes ist besonders vorteilhaft, da dann das Getriebe mit elektronischen Einrichtungen ausgestaltet werden kann, die keine externe Stromversorgung benötigen, was bei rotierenden Bauteilen stets einen gewissen konstruktiven Aufwand und damit Kosten bedingt. So können beispielsweise innerhalb des Getriebes elektrisch betriebene oder auszuwertende Sensoren vorgesehen sein und erfasste Daten per Funk nach außen geleitet werden, ohne hierfür aufwendige Leiterverbindungen vorsehen zu müssen.

Ein besonders vorteilhafter konstruktiver Aufbau des Getriebeträgers ergibt sich, wenn zwei mit Abstand voneinander angeordnete Trägerscheiben vorgesehen sind, die mittels den magnetischen Fluss führenden Elementen miteinander verbunden sind. Diese Elemente können vorteilhaft quaderförmige Blöcke aus magnetisch leitendem Material sein. Auch die Trägerscheiben sollten aus magnetisch leitendem Material sein, da andernfalls noch gesonderte magnetische Leiter vorzusehen sind, um die den magnetischen Fluss führenden Elemente magnetisch einzubinden.

Vorteilhaft sind die An- und die Abtriebswelle jeweils in einer Trägerscheibe des Getriebeträgers drehbar gelagert. Eine solche Anordnung führt zu einer äußert kompakten Bauform und weist eine hohe Stabilität auf.

Zur Verhinderung einer Flussumkehr ist es vorteilhaft, wenn der Bereich zwischen radialen Vorsprüngen mit elektrisch gut leitenden Trennelementen, beispielsweise aus Kupfer oder Aluminium, ausgefüllt ist. Diese elektrisch leitenden Trennelemente können vorteilhaft auch zwischen den den magnetischen Fluss führenden Elementen angeordnet sein. Eine solche Anordnung kann zusätzlich oder alternativ vorgesehen sein.

Vorteilhaft ist der Magnetkrafterzeuger, insbesondere der Permanentmagnet, zu beiden Axialseiten von scheibenförmigen magnetischen Leitern umgeben, um so die Bauhöhe des Magneterzeugers klein halten zu können, konstruktiv jedoch nicht an diese geringe Bauhöhe gebunden zu sein. Die beiden scheibenförmigen magnetischen Leiter können aus demselben Material hergestellt sein oder aus verschiedenen Materialien, um so die magnetische Flussdichte optimieren zu können, insbesondere auf ein Maximum zu bringen.

Besonders vorteilhaft ist es, wenn das Magnetgetriebe größenmäßig so ausgelegt wird, dass der Abstand der den magnetischen Fluss führenden Elemente ihrer Breite in Umfangsrichtung entspricht. Das heißt, dass die magnetischen Elemente und die dazwischen gebildeten Lücken gleich groß sind.

Die Kraft des Magnetkrafterzeugers kann, wie weiter oben ausgeführt, durch Anordnung einer den Permanentmagneten umgebenden Spule erhöht oder auch abgesenkt werden, wie dies zum Anfahren des Getriebes zur Überwindung des Rastmomentes erforderlich sein kann. Solche Mittel zur Steuerung des magnetischen Flusses können jedoch auch rein mechanisch vorgesehen sein, wenn beispielsweise, gemäß einer vorteilhaften Weiterbildung der Erfindung, ein Ring aus weichmagnetischem Material vorgesehen ist, welcher die den magnetischen Fluss führenden Element ganz, teilweise oder gar nicht umgeben kann, wenn dieser entsprechend axial verschiebbar angeordnet ist. So kann der magnetische Fluss minimiert werden, wodurch das Rastmoment des Getriebes verringert wird, was das Starten des Getriebes, das heißt das in Gang setzen des Getriebes erleichtert. Dieser Ring wird zweckmäßigerweise im Betrieb teilweise oder vollständig zurückgezogen, um dann das maximal mögliche Drehmoment übertragen zu können.

Die Erfindung ist nachfolgend anhand eines in der Zeichnung dargestellten Ausführungsbeispiels näher erläutert. Es zeigen:

Fig. 1          einen Längsschnitt durch ein Magnetgetriebe gemäß der Erfindung in stark vereinfachter schematischer Darstellung,

Fig. 2          eine Explosionsdarstellung der wesentlichen Bauteile des Getriebes gemäß Fig. 1,

Fig. 3          in schematischer perspektivischer Darstellung die Anordnung der miteinander im magnetischen Eingriff stehenden Bauteile bei Übertragung des maximalen Drehmoments,

Fig. 4     die Anordnung gemäß Fig. 3 im kraftlosem Zustand des Getriebes,

Fig. 5     fünf Querschnittsformen von radialen Vorsprüngen,

Fig. 6     fünf Querschnittsformen von magnetischen Fluss übertragenden Elementen,

Fig. 7     in schematischer Schnittdarstellung die Anordnung von elektrischen Leitern zwischen magnetischen Leitern,

Fig. 8 - 12     in stark schematisch vereinfachter Darstellung Konstruktionsvarianten des Magnetgetriebes,

Fig. 13     in stark vereinfachter perspektivischer Darstellung den Aufbau eines laminierten Magneten,

Fig. 14     eine Seitenansicht des Magneten gemäß Fig. 13,

Fig. 15     in stark vereinfachter perspektivischer Darstellung den Aufbau eines aus Segmenten gebildeten Magneten,

Fig. 16     eine Draufsicht auf den Magneten gemäß Fig. 15, und

Fig. 17     eine Ausführungsvariante des Magnetgetriebes gemäß Fig. 1 mit einem weichmagnetischen axial verschiebbaren Ring in Darstellung entsprechend Fig. 3.

Das dargestellte Magnetgetriebe ist ein Reluktanzgetriebe und weist eine Antriebswelle 1, eine Abtriebswelle 2 und einen Getriebeträger 3 auf, die magnetisch miteinander gekoppelt sind und in einem festen Verhältnis zueinander drehen. Wenn das Getriebe als Übersetzungsgetriebe dienen soll, erfolgt der Antrieb mittels der Antriebswelle 1, die beispielsweise mit einem Antriebsmotor gekuppelt ist, wobei der Abtrieb wahlweise über die Abtriebswelle 2 oder den Getriebeträger 3 erfolgt, der dann entsprechend beispielsweise als Hohlwelle, die Abtriebswelle 2 umgebend, ausgebildet ist. Bei dieser Anordnung erfolgt eine weiter unten noch im Einzelnen erläuterte Übersetzung von einer Eingangsdrehzahl der Antriebswelle 1 auf eine höhere Ausgangsdrehzahl der Abtriebswelle 2 oder des Getriebeträgers 3 bzw. der damit verbundenen Welle. Wenn der Antrieb über die Welle 2 oder den Getriebeträger 3 erfolgt, wenn also ein Elektromotor an dieser Seite des Getriebes angekuppelt ist, arbeitet das Getriebe als Untersetzungsgetriebe und dann bildet die Welle 1 die Abtriebswelle.

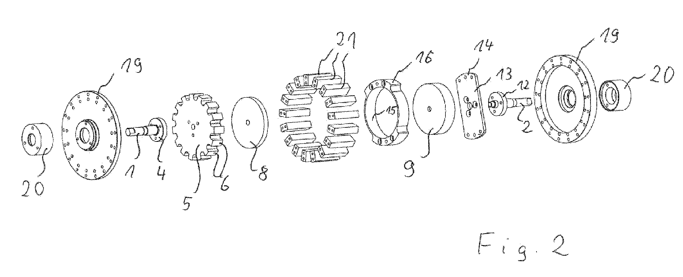

Die Antriebswelle 1 weist an ihrem getriebeinneren Ende einen Flansch 4 auf, an dem eine Scheibe 5 aus magnetisch leitendem Material anliegt, die eine Anzahl Z1 von radialen Vorsprüngen 6 aufweist, die über den zylindrischen Grundkörper ähnlich wie die Zähne eines Zahnrades radial nach außen vorspringen. Im Ausführungsbeispiel weist die Scheibe 5 siebzehn Zähne Z1 auf, die, wie insbesondere aus Fig. 2 ersichtlich ist, über den zylindrischen Grundkörper der Scheibe 5 radial vorspringen und deren Breite in Umfangsrichtung etwa ihrem umfänglichen Abstand zueinander entspricht. Diese Scheibe 5 weist fluchtend zu Gewindebohrungen im Flansch 4 Bohrungen auf, durch die Schrauben 7 geführt sind, deren Köpfe versenkt innerhalb der Scheibe 5 liegen und mit denen die Scheibe 5 am Flansch 4 der Antriebswelle 1 befestigt ist.

Die Scheibe 5 weist eine zentrale Durchgangsbohrung auf, die fluchtend zu einer zentralen Gewindebohrung am flanschseitigen Ende der Antriebswelle 1 angeordnet ist. Achsgleich an die Scheibe 5 schließt an der vom Flansch 4 abgewandten Seite ein scheibenförmiger zylindrischer Magnet 8 sowie daran anschließend ein magnetisch leitender scheibenförmiger zylindrischer Körper 9 an. Der Körper 9, der Magnet 8 und die Scheibe 5 weisen jeweils eine fluchtend zueinander angeordnete zentrale Bohrungen auf. Versenkt im Körper 9 sitzt eine die Bohrung durchsetzende Schraube 10, deren Schaft den Körper 9, den Magnet 8 und die Scheibe 5 durchsetzt und die in der zentralen Gewindebohrung der Antriebswelle 1 festgelegt ist. Diese Schraube 10 befestigt somit die Scheibe 5, den Magnet 8 und den Körper 9 am Flansch 4 der Antriebswelle 1 und verbindet diese Bauteile fest miteinander.

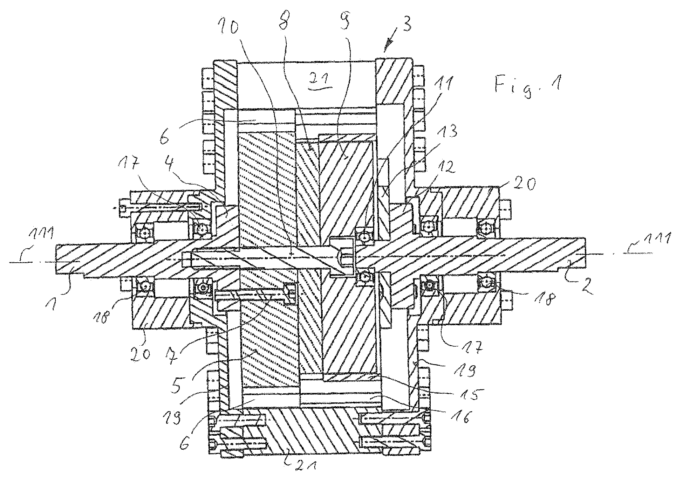

Der Magnet 8 weist in der dargestellten und insoweit maßstäblichen Fig. 1 eine axiale Länge auf, die etwa einem Drittel der axialen Länge des Körpers 9 bzw. der Scheibe 5 entspricht. Dabei fällt die Längsachse 111 des Körpers 9, des Magneten 8 und der Scheibe 5 mit der Längs- und Rotationsachse 111 der Antriebswelle 1, der Abtriebswelle 2 und des Getriebeträgers 3 zusammen. Der Durchmesser des Magneten 8 und der des Körpers 9 sind gleich groß und kleiner als der Kerndurchmesser der Scheibe 5 am Fuß der radialen Vorsprünge 6.

In dem scheibenförmigen Körper 9 ist an der zur Abtriebswelle 2 hin weisenden Seite ein Lager 11 eingelassen, in welchem das zum Getriebeinneren weisende Ende der Abtriebswelle 2 drehbar gegenüber den antriebsseitigen Bauteilen gelagert ist.

Die Abtriebswelle 2 weist ebenfalls einen Flansch 12 auf, der jedoch nicht am Ende, sondern mit Abstand zum getriebeinneren Ende der Welle 2 angeordnet ist. Über diesen Flansch 12 ist ein Träger 13 über Schrauben mit der Abtriebswelle 2 verbunden, welcher mit geringem Abstand aber getrennt zum Körper 9 angeordnet ist, diesen jedoch radial an diametral gegenüberliegenden Seiten überragt. In diesen überragenden Bereichen 14 ist der Träger 13 mit einem ringförmigen Körper 15 verbunden, welcher den Körper 9 mit geringem Spiel umgibt.

Dieser ringförmige Körper 15 weist radiale Vorsprünge 16 auf, die Anzahl Z2 dieser radialen Vorsprünge 16 beträgt beim Ausführungsbeispiel zwei. Der ringförmige Körper 15 ist im Bereich seiner radialen Vorsprünge 16 mit dem überragenden Bereich 14 des Trägers 13 durch parallel zur Achse 111 angeordnete Schrauben fest verbunden. Die radialen Vorsprünge 16 erstrecken sich über einen Winkelbereich von 90°, so dass auch die dazwischen gebildeten umfänglichen Freiräume sich über 90° des Umfangs erstrecken, wie dies insbesondere auch aus den Fig. 2 - 4 hervorgeht. Zumindest der ringförmige Körper 15 mit seinen radialen Vorsprüngen 16 aber auch der Träger 13 sind ebenfalls aus magnetisch leitendem Material gebildet.

Die Antriebswelle 1 und die Abtriebswelle 2 sind jeweils über zwei Lager 17, 18 in einem scheibenförmigen Körper 19 des Getriebeträgers 3 gelagert, dabei sind die innen liegenden Lager 17 innerhalb der scheibenförmigen Körper 19 angeordnet, wohingegen die äußeren Lager 18 jeweils in einem mit dem scheibenförmigen Körper 19 schraubverbundenen Ring 20 angeordnet sind.

Der Getriebeträger 3 ist über die Lager 17, 18 gegenüber den Wellen 1 und 2 frei drehbar angeordnet. Zwischen den scheibenförmigen Körpern 19 des Getriebeträgers 3 sind den magnetischen Fluss zwischen den radialen Vorsprüngen 6 und den radialen Vorsprüngen 16 leitende Elemente 21 vorgesehen, die auch als Polstäbe bzw. in ihrer Gesamtheit als Modulatoren bezeichnet werden. Diese Elemente 21 sind in der dargestellten Ausführungsform quaderförmig und erstrecken sich in Längsrichtung so weit, dass sie radial mit geringem Abstand an die Vorsprünge 6 sowie an die Vorsprünge 16 anschließen. Diese Elemente 21 sind mit gleichem Abstand zueinander auf einem gedachten Ring verteilt angeordnet und haben eine Breite, die ihrem Abstand zueinander entspricht, und zwar dort gemessen, wo sie am nächsten an die Vorsprünge 6 und 16 heranreichen, gegenüber denen sie mit geringem Spiel beabstandet sind. In der anhand der Fig. 1 - 4 dargestellten Ausführungsform sind die Elemente 21 jeweils durch zwei Schrauben mit einem scheibenförmigen Körper 19 verbunden, so dass sich eine käfigartige Struktur des Getriebeträgers 3 ergibt.

Das Bewegungsprinzip des vorstehend beschriebenen Reluktanzgetriebes beruht darauf, dass sich die zueinander beweglichen Getriebeteile so bewegen, dass ein magnetischer Kreis, in dem durch den Permanentmagneten 8 ein magnetischer Fluss aufgebaut wird, so ausgerichtet ist, dass sein magnetischer Wiederstand minimal ist. Der magnetische Fluss wird ausgehend von dem Magneten 8 zur Antriebswelle 1 hin auf die magnetisch leitende Scheibe 5 übertragen und erfährt dort eine Umlenkung um 90° in Richtung auf einen oder mehreren der radialen Vorsprünge 6. Je nach Stellung des Getriebeträgers 3 wird dieser magnetische Fluss dann von den radialen Vorsprüngen 6 auf eine oder mehrere der Elemente 21 übertragen und von dort wiederum auf die einen oder mehreren der radialen Vorsprünge 16. Von den radialen Vorsprüngen 16 gelangt der magnetische Fluss zu dem zylindrischen Scheibenkörper 9 und von dort zurück zum Magneten 8, womit der magnetische Kreis geschlossen ist.

Die Summe der Drehmomente zwischen Antriebswelle 1, Abtriebswelle 2 und Getriebeträger 3 ist stets null. Das Übersetzungsverhältnis des Getriebes ergibt sich aus dem Verhältnis der radialen Vorsprünge 6 (Z1 - Zahl der radialen Vorsprünge 6), der radialen Vorsprünge 16 (Z2 - Zahl der radialen Vorsprünge 16) und den Elementen 21 (Z3- Zahl der Elemente 21) und zwar wie folgt:

Das Übersetzungsverhältnis zwischen An- und Abtrieb entspricht dem Verhältnis Z2 zu Z1, wobei Z3 gleich Z1 plus Z2 ist. Daraus ergibt sich im vorstehend beschriebenen Ausführungsbeispiel ein Übersetzungsverhältnis von 1 zu 7,5, das heißt, wenn die Antriebswelle 1 einmal rotiert, rotiert die Abtriebswelle 7,5 mal, vorausgesetzt, dass der Getriebeträger 3 fixiert ist und nicht mit rotiert. Dabei rotieren die Antriebswelle 1 und die Abtriebswelle 2 gegensinnig.

Wie einleitend angegeben, kann das Getriebe auch in umgekehrter Richtung eingesetzt werden, also der Antrieb über die Welle 2 und der Abtrieb über die Welle 1 oder über den Getriebeträger 3 erfolgen, ähnlich wie dies bei einem Dreiwellen-Planetengetriebe möglich ist. Dabei ergeben sich grundsätzlich folgende Zusammenhänge:

Somit ergibt sich das Übersetzungsverhältnis bei nicht rotierendem, also fixiertem Getriebeträger 3 wie folgt:

$$R_{Getriebeträgerfest} = \frac{L}{H} = -D \cdot \frac{Z2}{Z1} \qquad (1)$$

wobei

| | |
|---|---|
| $R_{Getriebeträgerfest}$ | das Übersetzungsverhältnis |
| L | die Drehzahl der Antriebswelle 1 |
| H | die Drehzahl der Abtriebswelle 2 |
| D | die Drehrichtung |
| 1 | wenn An- und Abtriebswelle in entgegengesetzte Richtung drehen |
| -1 | wenn An- und Abtriebswelle in gleiche Richtung drehen) |

Z1              Anzahl der radialen Vorsprünge 6
Z2              Anzahl der radialen Vorsprünge 16 und
Z3              Anzahl der Elemente 21 ist.

$$Z3 = Z1 + D \cdot Z2 \qquad (2)$$

Wenn der Getriebeträger 3 mit rotiert, muss grundsätzlich folgender Zusammenhang erfüllt sein:

$$\frac{L-O}{H-O} = -D \cdot \frac{Z2}{Z1} \qquad (3)$$

wobei

O    die Drehzahl des Getriebeträgers ist.

Wenn statt des Getriebeträgers die Abtriebswelle 2 fixiert wird, dann ergibt sich folgendes Übersetzungsverhältnis:

$$R_{Abtriebswellefixiert} = \frac{O}{H} = \frac{D \cdot Z2}{Z1 + D \cdot Z2} \qquad (4)$$

Sinn und Zweck eines Getriebes ist es, die Geschwindigkeit der Abtriebsseite gegenüber der Antriebsseite zu erhöhen oder zu erniedrigen bzw. dass zu übertragende Moment zu verringern oder zu erhöhen. Dabei ergibt sich hinsichtlich der Leistungen folgender Zusammenhang:

$$P_h + P_l + P_s = P_m \qquad (5)$$

wobei

$P_h$    die Leistung der Abtriebswelle
$P_l$    die Leistung an der Antriebswelle und
$P_s$    die Leistung am Getriebeträger ist.

Die resultierende Leistung $P_m$ ist die im Getriebe gespeicherte Leistung.
Setzt man die im Getriebe gespeicherte Leistung $P_m$=0 dann ergibt sich daraus folgende die Drehmomente umfassende Gleichung:

$$T_h \cdot H + T_l \cdot L + T_s \cdot O = 0 \qquad (6)$$

wobei

$T_h$    das Drehmoment an der Abtriebswelle 2 und
$T_l$    das Drehmoment an der Antriebswelle 1 und
$T_s$    das Drehmoment am Getriebeträger bilden.

Wenn der Getriebeträger fixiert ist, ergibt sich folgendes Verhältnis:

$$-T_h \cdot \frac{H}{L} = T_l \qquad (7)$$

Und wenn die Abtriebswelle 2 fixiert ist, das folgende Verhältnis:

$$-T_h \cdot \frac{H}{O} = T_s \qquad 8)$$

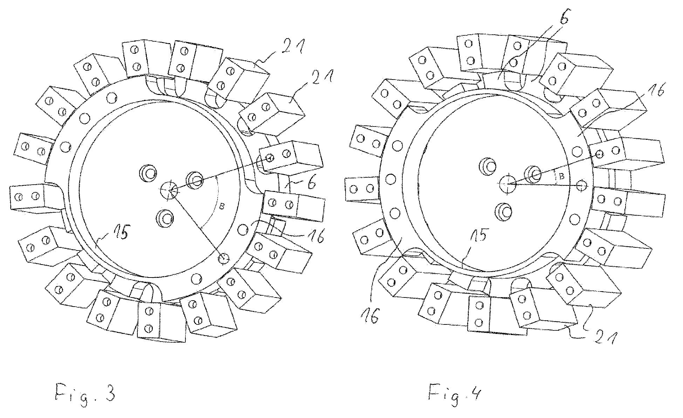

Wie die Fig. 3 und 4 verdeutlichten, ist der Winkel B zwischen einem radialen Vorsprung 16 und einem Element 21 in kraftlosem Zustand, das heißt, wenn keine äußeren Kräfte auf das Getriebe wirken, wie in Fig. 4 dargestellt, vergleichsweise klein. In diesem kraftlosen Zustand kann das Magnetgetriebe in beiden Richtungen betrieben werden. Dieser Winkel B vergrößert sich jedoch deutlich, wie anhand von Fig. 3 dargestellt ist, wenn das Magnetgetriebe das maximal mögliche Drehmoment überträgt. Dann ist das Getriebe auch drehrichtungsgebunden.

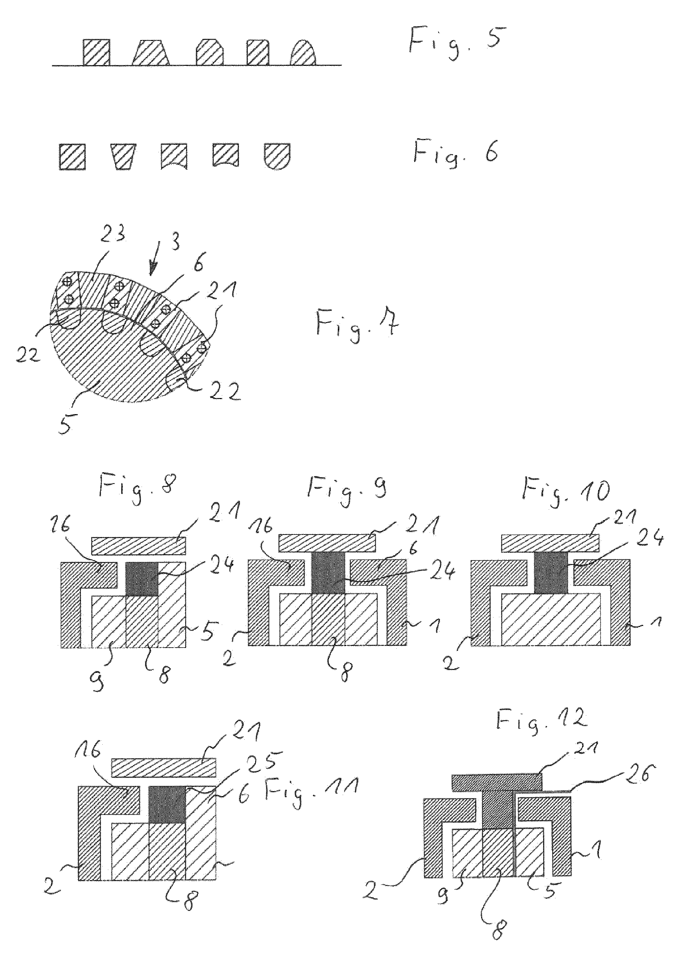

Anhand von Fig. 5 sind unterschiedliche Querschnittsformen der radialen Vorsprünge 6 bzw. 16 dargestellt, wie sie eingesetzt werden können, um den Drehmomentverlauf zu beeinflussen. So kann durch Abrundung der Vorsprünge, wie sie am extremsten in der rechtesten Darstellung der Fig. 5 dargestellt ist, der sogenannte "cogging effect", das heißt, dass das Pulsieren des Getriebes weitgehend vermindert werden kann, allerdings kann dies so weit gehen, dass das Getriebe nur noch in einer Richtung, beispielsweise als Übersetzungsgetriebe, wenn die radialen Vorsprünge 16 eine solche abgerundete Form haben, einsetzbar ist und nicht in umgekehrter Richtung. Entsprechende Ausgestaltungen können die Elemente 21 haben, die Querschnittsformen in dem gegenüberliegend zu den radialen Vorsprüngen 6, 16 liegenden Bereichen sind anhand von Fig. 6 beispielhaft dargestellt. Um diesen "cogging effect" zu vermindern, können die radialen Vorsprünge 6, 16 und/oder die Elemente 21 schräg gestellt angeordnet werden, ähnlich wie dies beim Verschränken von Rotoren von Elektromotoren zum Stand der Technik zählt.

Der magnetische Fluss innerhalb des Getriebes kann dadurch gebündelt werden, dass entweder zwischen den radialen Vorsprüngen 6, 16 und/oder zwischen den Elementen 21 elektrische Leiter angeordnet werden. In Fig. 7 sind zwischen den radialen Vorsprüngen 6 elektrische Leiter 22 und zwischen den Elementen 21 elektrische Leiter 23 angeordnet, die aus Aluminium bestehen und verhindern, dass in diesem Bereich ein magnetischer Fluss entsteht, wodurch der magnetische Fluss in den verbleibenden Bereichen gebündelt wird und dass übertragbare Drehmoment erhöht wird.

Anhand von Fig. 8 ist schematisch dargestellt, wie die Magnetkraft des Magneten 8 variiert und/oder gesteigert werden kann, in dem eine diesen umgebende elektrische Spule 24 angeordnet und entsprechend bestromt wird. Die Bestromung wird von einem nicht gezeigten Stromgenerator gemacht. Fällt der Stromgenerator aus, funktioniert das Getriebe immer noch, aber eine Variierung der Magnetkraft ist nicht mehr möglich.

Fig. 9 zeigt eine Ausführungsvariante, bei welcher der Magnet 8, die Spule 24 und die Elemente 21, das heißt der Getriebeträger 3, ortsfest angeordnet sind, wohingegen Antrieb und Abtrieb jeweils mit diesen radialen Vorsprüngen 6 und 16 drehbar angeordnet sind.

Anhand von Fig. 10 ist eine Ausführungsvariante entsprechend Fig. 9 dargestellt, bei welcher der Permanentmagnet 8 entfallen ist und die Magnetkraft ausschließlich durch die elektrische Spule 24 mit dem darin angeordneten elektrisch leitenden Material erzeugt wird.

Schließlich ist anhand von Fig. 11 dargestellt, wie eine Bündelung des Magnetfeldes, welches durch den Permanentmagneten 8 erzeugt wird, dadurch erreicht werden kann, dass ein elektrisch leitender Ring 25, welcher aus Kupfer gebildet ist, den Magneten 8 umgebend angeordnet ist. Auch hierdurch kann der magnetische Fluss innerhalb des Getriebes und damit das übertragbare Drehmoment gesteigert werden.

Anhand von Fig. 12 ist schematisch dargestellt, wie ein Teil des Getriebes, nämlich die Antriebswelle 1 und die Scheibe 5 durch eine Kapselung 26 vom übrigen Teil des Getriebes getrennt sind. Diese aus Edelstahl bestehende Kapselung 26 in Form einer Trennwand 26 ermöglicht es, einen Teil des Getriebes in einem anderen Medium laufen zu lassen, wie dies beispielsweise zur Bearbeitung von chemischen Substanzen bei Rührwerken oder dergleichen erforderlich ist.

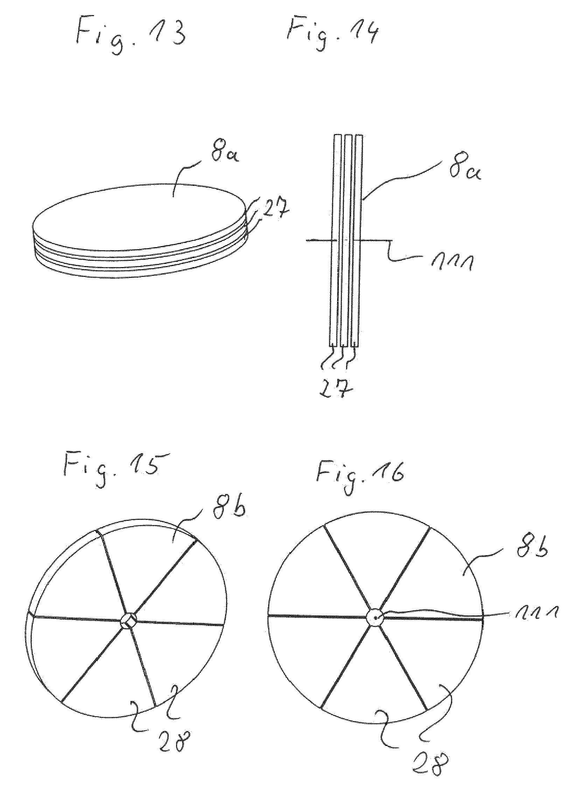

Der Permanentmagnet 8 muss nicht notwendigerweise ein homogener zylindrischer Magnetkörper sein, wie er anhand der Fig. 1 und 2 dargestellt ist, es kann sich dabei auch um einen laminierten Magneten 8a handeln, wie er beispielhaft anhand der Fig. 13 und 14 dargestellt ist, der dort aus drei Einzelmagnetscheiben gebildet ist, wie dies an sich zum Stand der Technik zählt.

Eine alternative Ausgestaltung ist ein segmentierter Magnet 8b, wie er anhand der Fig. 15 und 16 dargestellt ist. Der Magnet besteht aus sechs gleich großen Segmenten 28, die zusammengesetzt einen Magneten 8b ergeben, der ebenso wie der laminierte Magnet 8a in Richtung seiner Längsmittelachse 111 polarisiert ist.

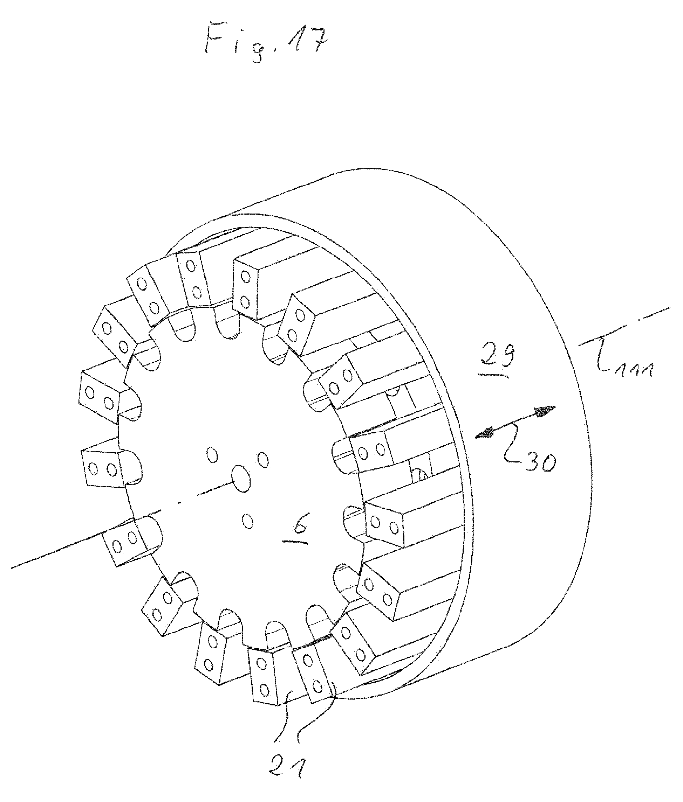

Anhand von Fig. 17 ist dargestellt, wie mit Hilfe eines weichmagnetischen Rings 29, der die Elemente 28 mit geringem Abstand umgibt, das übertragbare Drehmoment beeinflusst werden kann. Der Ring 29 ist innerhalb des Getriebes in Richtung der Achse 111 verschiebbar, so dass er ganz, teilweise (wie in Fig. 17 dargestellt) oder gar nicht die Elemente 21 umgeben kann. Die Verschieberichtungen sind in Fig. 17 durch den Doppelpfeil 30 symbolisiert. Dieser Ring 29 ist aus weichmagnetischem Material gebildet und umgibt die Elemente 21 mantelartig, berührt sie aber nicht. Der Ring 29 wird zur Steuerung des magnetischen Flusses vom Magnetkrafterzeuger 8 genutzt. Deckt der Ring 29 die Elemente nur zur Hälfte, wie in Fig. 17 dargestellt, ab, so ist der magnetische Fluss nur leicht geschwächt. Wird der Ring 29 voll übergeschoben, so dass er die Elemente 21 umfangsseitig abdeckt, ist der magnetische Fluss stark abgeschwächt. Diese Anordnung ist in den Fällen von Vorteil, wenn das Starten des Getriebes aufgrund des Rastmoments (cogging torque) problematisch ist. Wenn der Ring 29 die Elemente 21 umfänglich umgibt, ist das Rastmoment erniedrigt, so dass der Start des Getriebes erleichtert wird. Nachdem das Getriebe im Gang ist, kann dieser Ring 29 wieder zurückgezogen werden, so dass dann der magnetische Fluss maximal und das vom Getriebe übertragbare Drehmoment maximal ist.

Bezugszeichenliste

| | |
|---|---|
| 1 | Antriebswelle |
| 2 | Abtriebswelle |
| 3 | Getriebeträger |
| 4 | Flansch der Antriebswelle |
| 5 | Scheibe |
| 6 | radiale Vorsprünge |
| 7 | Schrauben |
| 8, 8a, 8b | Permanentmagnet |
| 9 | zylindrischer Körper |
| 10 | Schraube |
| 11 | Lager |
| 12 | Flansch |
| 13 | Träger |
| 14 | überragende Bereiche von 13 |
| 15 | ringförmiger Körper |
| 16 | radiale Vorsprünge |
| 17 | Lager (innen) |
| 18 | Lager (außen) |
| 19 | scheibenförmiger Körper |
| 20 | Ring |
| 21 | Elemente |
| 22 | elektrisch leitende Abschnitte |
| 23 | elektrisch leitende Abschnitte |
| 24 | elektrische Spule |
| 25 | elektrisch leitender Ring |
| 26 | Trennwand |
| 27 | Laminatscheibe |
| 28 | Segmente |
| 29 | Ring |
| 30 | Doppelpfeil |
| 111 | Achse |
| Z1 | - Zahl der radialen Vorsprünge 6 |
| Z2 | - Zahl der radialen Vorsprunge 16 |
| Z3 | - Zahl der Elemente 21 |
| B | Winkel (Fig. 3 und 4) |

**Patentansprüche**

**1.** Magnetgetriebe, insbesondere Reluktanzgetriebe, mit einem Magnetkrafterzeuger (8), mit einer Antriebswelle (1), mit einer Abriebswelle (2) und mit einem Getriebeträger (3), die magnetisch miteinander bewegungsgekoppelt sind, **dadurch gekennzeichnet, dass** nur ein Magnetkrafterzeuger (8) vorgesehen ist, dessen Nord-Südausrichtung zumindest abschnittsweise in Achsrichtung (111) einer Welle (1, 2) oder parallel dazu verläuft.

2. Magnetgetriebe nach Anspruch 1, **dadurch gekennzeichnet, dass** der Magnetkrafterzeuger (8) durch einen scheiben- oder ringförmigen Permanentmagneten (8) gebildet ist, dessen Mittelachse (111) mit der Achse (111) einer Welle (1, 2) zusammenfällt.

3. Magnetgetriebe nach Anspruch 2, **dadurch gekennzeichnet, dass** der Permanentmagnet (8) segmentiert oder aus nebeneinander angeordneten Teilmagneten gleichgerichteter Polarität aufgebaut ist.

4. Magnetgetriebe nach Anspruch 2 oder 3, **dadurch gekennzeichnet, dass** der Permanentmagnet (8) oder die Teilmagneten laminiert ist/sind.

5. Magnetgetriebe nach Anspruch 2, 3 oder 4, **dadurch gekennzeichnet, dass** der Permanentmagnet (8) oder die Teilmagneten gekapselt sind, bevorzugt in eine rostfreie Stahleinkapselung (26).

6. Magnetgetriebe nach einem der vorhergehenden Ansprüche, **dadurch gekennzeichnet, dass** der Permanentmagnet (8) umfänglich von einer elektrischen Spule umgeben ist, die von außerhalb des Getriebes bestrombar ist.

7. Magnetgetriebe nach einem der vorhergehenden Ansprüche, **dadurch gekennzeichnet, dass** der Magnetkrafterzeuger (8) durch einen Elektromagneten (24) oder einen Supraleiter gebildet ist oder einen solchen aufweist.

8. Magnetgetriebe nach einem der vorhergehenden Ansprüche, **dadurch gekennzeichnet, dass** An- und Abtriebswelle (1, 2) zueinander fluchten und dass der Getriebeträger (3) achsgleich dazu angeordnet ist.

9. Magnetgetriebe nach einem der vorhergehenden Ansprüche, **dadurch gekennzeichnet, dass** der Magnetkrafterzeuger (8) mit der Antriebswelle (1) verbunden ist, dass der Magnetkrafterzeuger (8) oder ein axial daran anschließender und magnetisch damit verbundener magnetischer Leiter (5) eine Anzahl Z1 magnetisch wirksamer radialer Vorsprünge (6) aufweist.

10. Magnetgetriebe nach einem der vorhergehenden Ansprüche, **dadurch gekennzeichnet, dass** die Abtriebswelle (2) mit einem magnetischen Leiter (15) verbunden ist, welcher den Magnetkrafterzeuger (8) oder mit einen damit verbundenen magnetischen Leiter (9) umgibt und mit diesem magnetisch verbunden und mechanisch getrennt ist, der eine Anzahl Z2 von magnetisch wirksamen radialen Vorsprüngen (16) aufweist.

11. Magnetgetriebe nach einem der vorhergehenden Ansprüche, **dadurch gekennzeichnet, dass** der Getriebeträger (3) eine Anzahl Z3 von den magnetischen Fluss zwischen den radialen Vorsprüngen (6, 16) führenden Elementen (21) aufweist, welche ringförmig und umfänglich der radialen Vorsprünge (6, 16) angeordnet sind.

12. Magnetgetriebe nach Anspruch 10, **dadurch gekennzeichnet, dass** die den magnetischen Fluss führenden Elemente (21) durch radial nach innen gerichtete magnetisch wirksame Vorsprünge eines Ringes aus magnetisch leitendem Material gebildet sind.

13. Magnetgetriebe nach einem der vorhergehenden Ansprüche, **dadurch gekennzeichnet, dass** mindestens ein den magnetischen Fluß führendes Element (21) von einer elektrischen Spule umgeben ist.

14. Magnetgetriebe nach Anspruch 12, **dadurch gekennzeichnet, dass** die mindestens eine elektrische Spule zur Erfassung von Drehzahl und/oder Drehmoment des Getriebeträgers (3) zur Antriebs- und/oder Abtriebswelle (1, 2) verwendet wird.

15. Magnetgetriebe nach einem der vorhergehenden Ansprüche, **dadurch gekennzeichnet, dass** die mindestens eine elektrische Spule zur Erzeugung elektrischer Energie beim Betrieb des Getriebes verwendet wird.

16. Magnetgetriebe nach einem der vorhergehenden Ansprüche, **dadurch gekennzeichnet, dass** der Getriebeträger (3) zwei voneinander beabstandete Trägerscheiben (19) aufweist, die mittels der den magnetischen Fluss führenden Elemente (21) miteinander verbunden sind.

**17.** Magnetgetriebe nach Anspruch 11, **dadurch gekennzeichnet, dass** die An- und die Abtriebswelle (1, 2) jeweils in einer Trägerscheibe (19) drehbar gelagert sind.

**18.** Magnetgetriebe nach einem der vorhergehenden Ansprüche, **dadurch gekennzeichnet, dass** zwischen den radialen Vorsprüngen (6, 16) und/oder zwischen den den magnetischen Fluss führenden Elementen (21) elektrisch leitende Trennelemente (22, 23) vorzugsweise aus Kupfer oder Aluminium angeordnet sind.

**19.** Magnetgetriebe nach einem der vorhergehenden Ansprüche, **dadurch gekennzeichnet, dass** zu beiden Axialseiten des Magnetkrafterzeugers (8) scheibenförmige magnetische Leiter (5, 9) angeordnet sind.

**20.** Magnetgetriebe nach einem der vorhergehenden Ansprüche, **dadurch gekennzeichnet, dass** der Abstand der den magnetischen Fluß führenden Elemente (21) ihrer Breite in Umfangsrichtung entspricht.

**21.** Magnetgetriebe nach einem der vorhergehenden Ansprüche, **dadurch gekennzeichnet, dass** Mittel zur Steuerung das magnetischen Flusses vorgesehen sind, insbesondere ein die den magnetischen Fluss führenden Elemente (21) umgebender Ring (29) aus weichmagnetischem Material, der axial verschiebbar angeordnet ist.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

8a

27

8a

mm

27

Fig. 15

Fig. 16

8b

8b

mm

28

28

Fig. 17

EP 3 252 936 A1

Europäisches
Patentamt

European
Patent Office

Office européen
des brevets

**EUROPÄISCHER RECHERCHENBERICHT**

Nummer der Anmeldung

EP 16 17 2465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | EP 0 715 397 A2 (PARRAS KARL HEINZ [DE]) 5. Juni 1996 (1996-06-05)<br>* Spalte 4, Zeile 4 - Spalte 6, Zeile 28; Abbildungen 4-6 *<br>----- | 1,2,6,7, 9-11,13, 19,21<br>3-5, 8-17,20<br>18 | INV.<br>H02K51/00<br><br>ADD.<br>H02K1/24<br>H02K16/02 |
| Y,D | WO 2015/197067 A1 (GRUNDFOS HOLDING AS [DK]) 30. Dezember 2015 (2015-12-30)<br>* Seite 6, Zeile 11 - Zeile 30 *<br>* Seite 8, Zeile 24 - Seite 10, Zeile 8; Abbildungen 1,2,5 *<br>----- | 3-5, 8-17,20 | |
| X | DE 32 22 450 A1 (GAP GES AUSWERT PATENTE [CH]) 1. Juni 1983 (1983-06-01)<br>* das ganze Dokument *<br>----- | 1,7,8,15 | |
| A | DE 197 43 380 C1 (EMF 97 GMBH [DE]) 25. März 1999 (1999-03-25)<br>* Spalte 12, Zeile 39 - Zeile 61; Abbildung 6 *<br>----- | 1 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| München | 21. November 2016 | von Rauch, Marianne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

18

**ANHANG ZUM EUROPÄISCHEN RECHERCHENBERICHT**
**ÜBER DIE EUROPÄISCHE PATENTANMELDUNG NR.**

EP 16 17 2465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2016

| Im Recherchenbericht angeführtes Patentdokument | Datum der Veröffentlichung | Mitglied(er) der Patentfamilie | Datum der Veröffentlichung |
|---|---|---|---|
| EP 0715397 A2 | 05-06-1996 | AT 194893 T<br>DE 4442992 A1<br>EP 0715397 A2 | 15-08-2000<br>05-06-1996<br>05-06-1996 |
| WO 2015197067 A1 | 30-12-2015 | KEINE | |
| DE 3222450 A1 | 01-06-1983 | DE 3222450 A1<br>NL 8105385 A | 01-06-1983<br>16-06-1983 |
| DE 19743380 C1 | 25-03-1999 | AT 235121 T<br>AU 9745798 A<br>CN 1284211 A<br>DE 19743380 C1<br>DK 0910154 T3<br>EP 0910154 A1<br>ES 2195244 T3<br>JP H11155268 A<br>TW 417346 B<br>WO 9917431 A1 | 15-04-2003<br>23-04-1999<br>14-02-2001<br>25-03-1999<br>14-07-2003<br>21-04-1999<br>01-12-2003<br>08-06-1999<br>01-01-2001<br>08-04-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008060284 A1
- DE 4223815 A1
- WO 2015197067 A1
- DE 102013213569 A1